# EUROPÄISCHE PATENTSCHRIFT

(11) **EP 3 126 733 B1**
(45) Veröffentlichungstag und Bekanntmachung des Hinweises auf die Patenterteilung: **01.05.2024**
(21) Anmeldenummer: 15712588.1
(22) Anmeldetag: 20.03.2015
(51) Int. Cl.: F16N 27/02, F16N 25/02

(54) **SCHMIERMITTELINJEKTOR**
LUBRICANT INJECTOR
INJECTEUR DE LUBRIFIANT

(30) Priorität: 31.03.2014 DE 102014205975
(43) Veröffentlichungstag der Anmeldung: 08.02.2017
(73) Patentinhaber: SKF Lubrication Systems Germany GmbH, 69190 Walldorf (DE)
(72) Erfinder: KREUTZKÄMPER, Jürgen, 74915 Waibstadt-Daisbach (DE); KANNEGIESSER, Herbert, 40591 Düsseldorf (DE); SCHNEIDER, Edward, 68775 Ketsch (DE); TRINKEL, Ralf, 67227 Frankenthal (DE)
(74) Vertreter: Kuhstrebe, Jochen
(86) Internationale Anmeldenummer: PCT/EP2015/055921
(87) Internationale Veröffentlichungsnummer: WO 2015/150117

(56) Entgegenhaltungen:
- DE-A1- 2 533 811
- DE-A1-102006 012 810
- DE-T2- 60 215 036
- DE-U- 7 239 368
- US-A- 2 699 842
- US-A- 2 973 058
- US-A- 5 147 016

## Beschreibung

Vorliegende Erfindung betrifft einen Schmiermittelinjektor zur Abgabe von Schmiermittel an mindestens eine Schmiermittelauslassstelle, wie im Oberbegriff des Patentanspruchs 1 definiert, sowie ein Schmiermittelinjektorblock mit mindestens zwei derartigen Schmiermittelinjektoren.

Schmiermittelinjektoren, auch Schmiermittelverteiler genannt, sind aus dem Stand der Technik bekannt und werden oftmals als Teil von Zentralschmiereinrichtungen eingesetzt, mit denen ein Schmiermittel von einer zentralen Schmiermittelquelle an mindestens einen Schmiermittelverbraucher abgegeben wird. Dabei weist üblicherweise der Schmiermittelinjektor einen Schmiermitteleinlass auf, der mit einer Schmiermittelquelle, insbesondere einer Schmiermittelpumpe verbunden ist, wobei die Schmiermittelquelle sequenziell druckbeaufschlagtes Schmiermittel zu dem Schmiermittelinjektor fördert. Weiterhin weist der Schmiermittelinjektor gewöhnlich einen Steuerkolben auf, der dazu ausgelegt ist, Schmiermittel von dem Schmiermitteleinlass in eine Dosierkammer eines Dosierkolbens zu leiten, von wo aus die in der Dosierkammer vorhandene Schmiermittelmenge an den Schmiermittelauslass und dann an den Schmiermittelverbraucher abgegeben wird.

Aus dem Stand der Technik, beispielweise der EP 1 631 767, der DE 602 15 036, oder der EP 1 779 023, sind Schmiermittelinjektoren bekannt, deren Steuerkolben unter dem am Schmiermitteleinlass anstehenden Schmiermitteldruck gegen die Wirkung einer ersten Rückstellfeder in eine Dosierlage verschiebbar ist, in der der Steuerkolben einen Durchlass von Schmiermittel zu einer ersten Dosierkammer freigibt. Der Dosierkolben selbst ist ebenfalls gegen die Wirkung einer zweiten Rückstellfeder verschiebbar, wodurch das in einer zweiten Dosierkammer vorhandene Schmiermittel in Richtung einer Schmiermittelauslasskammer und von dort zu einem Schmiermittelauslass gedrängt wird. Bei Druckentlastung am Schmiermitteleinlass, beispielsweise aufgrund des Schmiermittelpumpenzyklus, kann der Dosierkolben in seine Ausgangslage überführt werden, wodurch das in der ersten Dosierkammer vorhandene Schmiermittel in die zweite Dosierkammer und eine Ausgabekammer überführt wird.

Nachteilig bei den aus dem Stand der Technik bekannten Schmiermittelinjektoren ist jedoch, dass sie aus sehr vielen Bauteilen zusammengesetzt werden müssen, und schon aufgrund der zwei benötigten Rückstellfedern und der benötigten Verbindungskanäle zwischen den verschiedenen Kammern, sehr kompliziert zu fertigen sind. Darüber hinaus muss die Dosierkammer und der Dosierkolben ausreichend groß gefertigt werden, damit pro Schmiermittelpumpenzyklus ausreichend Schmiermittel an dem Schmiermittelauslass bereitgestellt werden kann. Dadurch nimmt der Schmiermittelinjektor einen großen Bauraum ein.

Alternativ wurde im Stand der Technik, beispielsweise der DE 10 2006 012 810 A1 und DE 2533811 A1, vorgeschlagen, Dosierkolben und Steuerkolben nebeneinander anzuordnen, um den Bauraumbedarf des Injektors zu verkleinern. Um allerdings derartige Schmiermittelinjektoren mit Schmiermittel zu versorgen, müssen üblicherweise mindestens zwei Schmiermittelzuführstellen für die beiden Schaltzustände des Steuerkolbens bereitgestellt werden. Dies wiederum erfordert einen großen Bauraumbedarf außerhalb des Schmiermittelinjektors und/oder weitere Elemente, wie beispielsweise Ventile oder Verteiler, die dafür sorgen, dass Schmiermittel an den beiden Schmiermittelzuführstellen bereitgestellt werden kann.

Aufgabe vorliegender Erfindung ist es deshalb, einen robusten und zuverlässig funktionierenden Schmiermittelinjektor bereitzustellen, der wenig Bauraum beansprucht und dabei einfach zu fertigen ist.

Diese Aufgabe wird durch einen Schmiermittelinjektor gemäß Patentanspruch 1, sowie einen Schmiermittelinjektorblock gemäß Patentanspruch 18 gelöst.

Der Schmiermittelinjektor weist ein Gehäuse mit zumindest einem Schmiermitteleinlass und mindestens einem Schmiermittelauslass auf, sowie einen Steuerkolben und einen Dosierkolben, wobei der Steuerkolben dazu ausgelegt ist, Schmiermittel von dem Schmiermitteleinlass zu dem Dosierkolben zu leiten. Der Dosierkolben ist weiterhin dazu ausgelegt, das vom Steuerkolben bereitgestellte Schmiermittel zu dem mindestens einen Schmiermittelauslass zu fördern. Dabei basiert die Erfindung auf der Idee, den Dosierkolben derart auszubilden, dass der Dosierkolben eine erste als erster Kolbenarbeitsraum ausgebildete Dosierkammer und eine zweite als zweiter Kolbenarbeitsraum ausgebildete Dosierkammer aufweist, die jeweils direkt mit dem mindestens einen Schmiermittelauslass verbunden sind. Durch den so gebildeten direkten Schmiermittelinjektor kann Schmiermittel sowohl aus der ersten Dosierkammer als auch aus der zweiten Dosierkammer, vorzugsweise ohne Druckverlust, direkt zu dem mindestens einem Schmiermittelauslass geleitet werden, ohne dass das Schmiermittel, wie insbesondere aus der DE 602 15 036 bekannt, erst von einer der Dosierkammern in eine Auslasskammer geleitet werden muss.

Weiterhin weist der Schmiermittelinjektor weiterhin einen ersten Schmiermittelkanal und einen zweiten Schmiermittelkanal auf, wobei der erste Schmiermittelkanal die erste Dosierkammer mit dem Schmiermitteleinlass oder dem Schmiermittelauslass verbindet und der zweite Schmiermittelkanal die zweite Dosierkammer mit dem Schmiermitteleinlass oder dem Schmiermittelauslass verbindet. Da der erste und der zweite Schmiermittelkanal sowohl als Schmiermittelzufuhr zu den Dosierkammern als auch als Schmiermittelabfuhr aus den Dosierkammern verwendet werden können, sind die in dem Gehäuse des Schmiermittelinjektors bereitzustellenden Kanäle deutlich verringert, was die Herstellung vereinfacht.

Um einen möglichst robusten und platzsparenden Schmiermittelinjektor vorzusehen, weist der Steuerkolben weiterhin einen ersten Steuerraum, insbesondere einen ersten Ringraum, und einen zweiten Steuerraum, insbesondere einen zweiten Ringraum, auf, und definiert so einen ersten Schaltzustand, in dem der Schmiermitteleinlass über den ersten Steuerraum des Steuerkolbens mit dem ersten Schmiermittelkanal und der zweiten Dosierkammer des Dosierkolbens verbunden ist. In dem zweiten Schaltzustand ist dagegen der Schmiermitteleinlass über den zweiten Steuerraum des Steuerkolbens mit dem zweiten Schmiermittelkanal aber der ersten Dosierkammer des Dosierkolbens verbunden.

Dadurch kann auch bei nebeneinander angeordneten Steuerkolben und Dosierkolben nur ein Schmiermitteleinlass vorhanden sein, der entweder den ersten Steuerraum oder den zweiten Steuerraum mit Schmiermittel versorgt. Dies vereinfacht wiederum den Aufbau des Schmiermittelinjektors deutlich, da zudem der sowieso vorhandene Steuerkolben steuert, ob die Dosierkammer mit dem Schmiermitteleinlass oder dem Schmiermittelauslass verbindbar ist. Weiterhin kann mit dem vorgestellten Schmiermittelinjektor vorteilhafterweise mehr Schmiermittel von dem Schmiermittelinjektor an dem Schmiermittelauslass bereitgestellt werden, ohne den Bauraum zu vergrößern. Zudem kann dadurch der Aufbau des Schmiermittelinjektors deutlich vereinfacht werden, da keine Verbindung zwischen der ersten und der zweiten Dosierkammer hergestellt oder ein weiteres Rückstellelement für den Dosierkolben bereitgestellt werden muss. Dadurch kann auf ein aufwändiges Anpassen der Rückstellelemente aneinander verzichtet werden. Zudem kann eine relativ große Dosierbandbreite mit dem erfindungsgemäßen Schmiermittelinjektor bereitgestellt werden.

Gemäß einem vorteilhaften Ausführungsbeispiel ist der erste Schmiermittelkanal über einen ersten Schmiermittelauslasskanal und der zweite Schmiermittelkanal über einen zweiten Schmiermittelauslasskanal mit dem mindestens einen Schmiermittelauslass verbunden. Die vorteilhaften Schmiermittelauslasskanäle gewährleisten dabei eine einfache Führung des Schmiermittels von dem jeweiligen Schmiermittelkanal bzw. der jeweiligen Dosierkammer zu dem mindestens einen Schmiermittelauslass. Zudem kann dieser Schmiermittelauslasskanal, bei dem entsprechend anderen Schaltzustand einfach mittels des Steuerkolbens abgeschlossen werden.

Wie oben erwähnt, ist gemäß eines vorteilhaften Ausführungsbeispiels, in einem ersten Schaltzustand des Steuerkolbens der Schmiermitteleinlass über den ersten Steuerraum des Steuerkolbens und den ersten Schmiermittelkanal mit der zweiten Dosierkammer des Steuerkolbens verbunden, während in dem zweiten Schaltzustand der Schmiermitteleinlass über den zweiten Steuerraum des Steuerkolbens und den zweiten Schmiermittelkanal mit der ersten Dosierkammer des Steuerkolbens verbunden ist. Auf der anderen Seite ist dabei vorzugsweise in dem ersten Schaltzustand des Steuerkolbens die erste Dosierkammer des Dosierkolbens über den zweiten Schmiermittelkanal und den zweiten Steuerraum des Steuerkolbens mit dem mindestens einen Schmiermittelauslass verbunden, während in dem zweiten Schaltzustand die zweite Dosierkammer des Dosierkolbens über den ersten Schmiermittelkanal und den ersten Steuerraum des Steuerkolbens mit dem mindestens einen Schmiermittelauslass verbunden ist.

Über die entsprechend angeordneten Steuerräume kann der Steuerkolben mittels des über den Schmiermitteleinlass eingebrachten Schmiermittels gesteuert und von einem ersten Steuerzustand in einen zweiten Steuerzustand versetzt werden. Abhängig von dem jeweiligen Schaltzustand wird wiederum Schmiermittel aus der ersten oder der zweiten Dosierkammer an den Schmiermittelauslass gefördert, während gleichzeitig die jeweils andere Dosierkammer mit Schmiermittel beaufschlagt wird. Dadurch kann während eines Pumpenzyklus einer mit dem Schmiermitteleinlass verbundenen Schmiermittelpumpe Schmiermittel sowohl aus der ersten als auch aus der zweiten Dosierkammer an dem Schmiermittelauslass bereitstellen, wodurch sich die bereitgestellte Schmiermittelmenge insgesamt vergrößert.

Eine derartige Ausgestaltung des Schmiermittelinjektors hat aber auch den weiteren Vorteil, dass das Schmiermittel aus der ersten bzw. der zweiten Dosierkammer nicht an dem gleichen Schmiermittelauslass bereitgestellt werden muss, sondern es ist, wie ein weiteres bevorzugtes Ausführungsbeispiel zeigt, möglich, einen ersten und einen zweiten Schmiermittelauslass bereitzustellen, die jeweils mit dem Schmiermittel aus der ersten bzw. zweiten Dosierkammer mit Schmiermittel beaufschlagt werden. Dadurch kann mit einem Schmiermittelinjektor Schmiermittel, nicht wie aus dem Stand der Technik, nur an einem Schmiermittelauslass bereitgestellt werden, sondern es ist möglich gleichzeitig zwei Verbraucher mit Schmiermittel zu versorgen.

Dabei ist insbesondere vorteilhaft, wenn der erste Schmiermittelauslass mit dem ersten Schmiermittelauslasskanal und der zweite Schmiermittelauslass mit dem zweiten Schmiermittelauslasskanal in Verbindung steht.

Weiterhin ist bei dem erfindungsgemäßen Schmiermittelinjektor mindestens ein Schmiermittelauslassverbindungskanal vorgesehen, der zumindest den ersten Schmiermittelauslass und den zweiten Schmiermittelauslass verbindet. Sollte beispielsweise Schmiermittel an dem ersten Verbraucher nur alle zwei oder drei Pumpenzyklen bereitgestellt werden, was beispielsweise über ein am Schmiermittelauslass angeordnetes Ventil realisierbar ist, so kann das überschüssige Schmiermittel aus der jeweiligen Dosierkammer auch an den jeweilig anderen Schmiermittelauslass über den Schmiermittelauslassverbindungskanal gefördert werden. Dabei ist insbesondere vorteilhaft, wenn einer der Schmiermittelauslässe verschließbar ausgebildet ist. Ist beispielsweise bei einem Einsatzgebiet nur nötig, einen einzelnen Verbraucher mit Schmiermittel über den Schmiermittelinjektor zu beaufschlagen, so kann der zweite Schmiermittelauslass mittels eines Verschlusselements verschlossen werden. Ein baulich anders ausgestalteter Schmiermittelinjektor ist dafür nicht notwendig. Dadurch reduziert sich die Vorratshaltung für Schmiermittelinjektoren, da ein einzelner Schmiermittelinjektor für eine Vielzahl von Einsatzgebieten verwendet werden kann.

Um diese variierende Einsatzfähigkeit des Schmiermittelinjektors weiter zu vergrößern, ist es, wie ein weiteres vorteilhaftes Ausführungsbeispiel zeigt, bevorzugt, an dem mindestens einen Schmiermittelauslass eine, vorzugsweise formschlüssige, lösbare Verbindungseinrichtung, insbesondere ein Schraubgewinde, eine Schnappverbindung und/oder eine Steckverbindung vorzusehen, die dazu ausgelegt ist, den Schmiermittelauslass zumindest mit einem Auslassverschlusselement oder einem Schmiermittelleitungsanschlusselement zum Anschließen einer Schmiermittelleitung oder einer Ventileinheit zu verbinden. Dadurch kann der erfindungsgemäße Schmiermittelinjektor auf einfache Weise in die jeweils gewünschte Einsatzform gebracht werden. Der mindestens eine zwischen den Schmiermittelauslässen angeordnete Schmiermittelauslassverbindungskanal stellt dabei sicher, dass auch eine ungerade Anzahl von Schmiermittelauslässen mittels des erfindungsgemäßen Schmiermittelinjektors bereitgestellt werden kann.

Neben dem ersten und/oder zweiten Schmiermittelauslass kann an dem ersten und/oder zweiten Schmiermittelauslasskanal auch noch ein weiterer Schmiermittelauslass vorgesehen sein.

Gemäß einem weiteren vorteilhaften Ausführungsbeispiel weist der Schmiermittelinjektor weiterhin ein Steuerkolbenvorspannelement auf, insbesondere eine Rückstellfeder, das den Steuerkolben in einen der Schaltzustände, vorzugsweise den ersten Schaltzustand, vorspannt. Dabei kann die Vorspannung des Steuerkolbenvorspannelements einstellbar sein. Das Steuerkolbenvorspannelement ermöglicht dabei, dass der Steuerkolben, wenn ein am Schmiermitteleinlass anliegender Schmiermitteldruck unter einen bestimmten Schwellenwert sinkt, der Steuerkolben in den ersten Schaltzustand rückführbar ist. Die Größe des Schmiermitteldruckschwellenwerts kann dabei über die Vorspannkraft des Vorspannelements bestimmt werden. Eine Verringerung des Schmiermitteldrucks erfolgt üblicherweise am Ende eines Pumpenzyklus, wenn kein weiteres Schmiermittel von der Schmiermittelpumpe in die Schmiermittelzuführleitung und zu dem Schmiermitteleinlass geführt wird.

Zudem kann vorteilhafterweise mindestens einer der Schmiermittelauslässe als Federraum für das Steuerkolbenvorspannelement ausgebildet sein. Dadurch kann ein besonders kompakter Schmiermittelinjektor bereitgestellt werden. Zudem ermöglicht eine derartige Anordnung eines der Schmiermittelauslässe, dass ein an dem derartig ausgebildeten Schmiermittelauslass anliegender Schmiermitteldruck das Rückstellelement und damit ein Rückstellen des Steuerkolbens in den ersten Schaltzustand unterstützt. Dies kann insbesondere bei niedrigen Umgebungstemperaturen vorteilhaft sein.

Um dagegen den Steuerkolben aus dem ersten Schaltzustand in einen zweiten Schaltzustand zu überführen, ist weiterhin vorteilhafterweise der Steuerkolben mit einem Steuerkolbenarbeitsraum ausgestattet, der mit Schmiermittel beaufschlagbar ist, um den Steuerkolben gegen die Vorspannung des Vorspannungselements in den zweiten Schaltzustand zu überführen. Dabei ist insbesondere vorteilhaft, wenn der Steuerkolbenarbeitsraum mit einem Schmiermittelumschaltdruckkanal verbunden ist, der dazu ausgelegt ist, Schmiermittel in den Steuerkolbenarbeitsraum zu leiten, wenn ein bestimmter Schmiermitteldruck am Schmiermitteleinlass und/oder im ersten Steuerraum des Steuerkolbens anliegt oder überstiegen wird. Über diese druckbestimmte Ansteuerung des Steuerkolbens kann auf komplexe Steuergeräte verzichtet werden, was wiederum den Aufbau vereinfacht und die Kosten reduziert.

Ein weiterer Aspekt vorliegender Erfindung betrifft einen Schmiermittelinjektorblock, der zumindest zwei der oben beschriebenen Schmiermittelinjektoren aufweist. Dabei kann der Schmiermittelinjektorblock vorzugsweise mindestens einen zentralen Schmiermitteleingang und einen zentralen Schmiermittelabgang aufweist, wobei der zentrale Schmiermittelabgang dazu ausgelegt ist den Schmiermittelinjektorblock mit einem weiteren Schmiermittelinjektor oder einem weiteren Schmiermittelinjektorblock in Reihe zu verbinden. Weiterhin kann an dem Schmiermittelblock ein zentraler Schmiermittelkanal vorgesehen sein, der die Schmiermitteleinlässe der in dem Block angeordneten Schmiermittelinjektoren mit Schmiermittel versorgt. Dadurch können vorteilhafterweise mehrere Schmiermittelverbraucher mit Schmiermittel versorgt werden. Da insbesondere die erste Dosierkammer und die zweite Dosierkammer mit eigenständigen Schmiermittelauslässen verbindbar sind, können mit einem erfindungsgemäßen Schmiermittelinjektor gleich zwei Verbraucher mit Schmiermittel versorgt werden. Das bedeutet aber auch, dass mit einem Schmiermittelinjektorblock mit dem beispielsweise acht Verbraucher versorgt werden sollen, erfindungsgemäß aufgrund der mindestens zwei Schmiermittelauslässe nur noch vier Schmiermittelinjektoren in dem Schmiermittelinjektorblock bereitgestellt werden müssen. Dadurch kann der Bauraum verringert und die Kosten gesenkt werden.

Weitere Vorteile und vorteilhafte Ausgestaltungen sind in den Ansprüchen, der Beschreibung und den Zeichnungen definiert.

Im Folgenden soll die Erfindung anhand von in den Zeichnungen dargestellten Ausführungsbeispielen näher beschrieben werden. Dabei sind die Ausführungsbeispiele rein exemplarischer Natur und sollen nicht den Schutzbereich der Anmeldung festlegen. Dieser wird allein durch die anhängigen Ansprüche definiert.

Es zeigen:
- Fig. 1: eine Schaltanordnung des Schmiermittelinjektors;
- Fig. 2: eine schematische Schnittansicht durch ein erstes Ausführungsbeispiel des Schmiermittelinjektors;
- Fig. 3: eine schematische Darstellung des Schmiermittelinjektors in verschiedenen Schaltzuständen während eines Schmiermitteleinleitungszyklus;
- Fig. 4: eine schematische Schnittansicht durch ein zweites bevorzugtes Ausführungsbeispiel des erfindungsgemäßen Schmiermittelinjektors;
- Fig. 5.: eine schematische Schnittansicht durch ein drittes bevorzugtes Ausführungsbeispiel des erfindungsgemäßen Schmiermittelinjektors;
- Fig. 6.: eine schematische Schnittansicht durch ein viertes bevorzugtes Ausführungsbeispiel des erfindungsgemäßen Schmiermittelinjektors; und
- Fig. 7.: eine schematische Schnittansicht durch ein bevorzugtes Ausführungsbeispiel eines erfindungsgemäßen Schmiermittelinjektorblocks.

Im Folgenden werden gleiche und/oder funktionell gleichwirkende Elemente mit denselben Bezugszeichen gekennzeichnet.

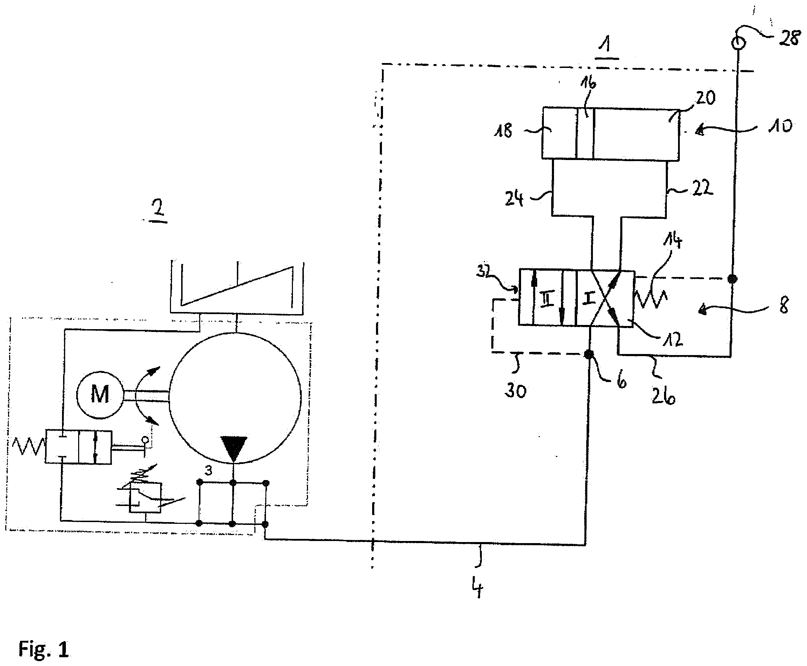

Fig. 1 zeigt ein schematisches Schaltbild eines Schmiermittelinjektors 1, das mit Schmiermittel aus einer Schmiermittelpumpenanordnung beaufschlagt wird, wobei das Schmiermittel über eine Schmiermittelleitung 4 druckbeaufschlagt an einem Schmiermitteleinlass 6 des Schmiermittelinjektors 1 bereitgestellt wird. Die Schmiermittelpumpenanordnung 2 ist dabei derart ausgelegt, dass Schmiermittel in der Schmiermittelleitung 4 während eines Pumpenzyklus druckbeaufschlagt ist und am Ende des Pumpenzyklus die Schmiermittelleitung 4 drucklos geschaltet wird. Drucklos bedeutet dabei beispielsweise, ein Druck von weniger als 70 bar, während die Druckbeaufschlagung in einem deutlich höheren Druckbereich von beispielsweise mehr als 100 bar liegt.

Derartige Schmiermittelpumpen sind aus dem Stand der Technik bekannt und werden deshalb nicht weiter beschrieben.

Wie Fig. 1 weiter zu entnehmen, weist der Schmiermittelinjektor 1 weiterhin eine Steuereinheit 8 und eine Dosiereinheit 10 auf. Die Steuereinheit 8 weist einen Steuerkolben 12 auf, der von einem ersten (I) in einen zweiten (II) Schaltzustand bringbar ist. Dabei ist der Steuerkolben 12 mittels eines Vorspannelements 14, insbesondere ein Federelement, in den ersten Schaltzustand I vorgespannt.

Das Dosierelement 10 weist einen Kolben 16 auf, der einen ersten als erste Dosierkammer ausgebildeten Kolbenarbeitsraum 18 und einen zweiten als zweite Dosierkammer ausgebildeten Kolbenarbeitsraum 20 aufweist. Liegt ein Schmiermitteldruck am Schmiermitteleinlass 6 an, so wird in dem ersten Schaltzustand I Schmiermittel über den Steuerkolben 12 in die zweite Dosierkammer 20 mittels eines ersten Schmiermittelkanals 22 geleitet. Durch das sich in der Dosierkammer 20 erhöhende Volumen des Schmiermittels, wird der Kolben 16 in Richtung der ersten Dosierkammer 18 verschoben, so dass Schmiermittel aus der ersten Dosierkammer 18 über einen zweiten Schmiermittelkanal 24 an einen Schmiermittelauslass 26 und von dort aus an einen Schmiermittelverbraucher 28 geleitet wird.

Hat der Kolben 16 seinen maximalen Hub in Richtung der ersten Dosierkammer 18 erreicht, also ist eine weitere Zustellung in Richtung Dosierkammer 18 nicht möglich, erhöht sich der Druck des Schmiermittels in der zweiten Dosierkammer 20, in dem ersten Schmiermittelkanal 22 und auch am Schmiermitteleinlass 6. Am Schmiermitteleinlass 6 ist weiterhin ein Schmiermittelumschaltdruckkanal 30 angeordnet, der bei Überschreiten eines bestimmten Schmiermitteldrucks an dem Schmiermitteleinlass 6 oder dem Steuerkolben 12 Schmiermittel in Richtung eines Steuerkolbenarbeitsraums 32 leitet. Dadurch wird der Steuerkolben 12 gegen die Vorspannkraft des Vorspannelements 14 in den zweiten Schaltzustand II überführt.

In dem zweiten Schaltzustand II wird nun Schmiermittel über den zweiten Schmiermittelkanal der ersten Dosierkammer 18 zugeführt, was wiederum eine Zustellbewegung des Kolbens 16 in Richtung der zweiten Dosierkammer 20 bewirkt. Dadurch wird das in der zweiten Dosierkammer 20 vorhandene Schmiermittel über den ersten Schmiermittelkanal 22 in Richtung des Schmiermittelauslasses 26 gefördert.

Wird am Ende des Schmiermittelpumpenzyklus die Schmiermittelleitung 4 kein weiteres bzw. wenig Schmiermittel in Richtung des Schmiermitteleinlasses 6 gefördert, sinkt der Druck in der Schmiermittelleitung 4 und damit am Schmiermitteleinlass 6. Ist der Schmiermitteldruck unter einen bestimmten Schwellenwert gefallen, der vorzugsweise über die Vorspannkraft des Vorspannelements 14 bestimmt ist, kann über das Vorspannelement 14 der Steuerkolben 12 in seinen ersten Schaltzustand I zurückgeführt werden.

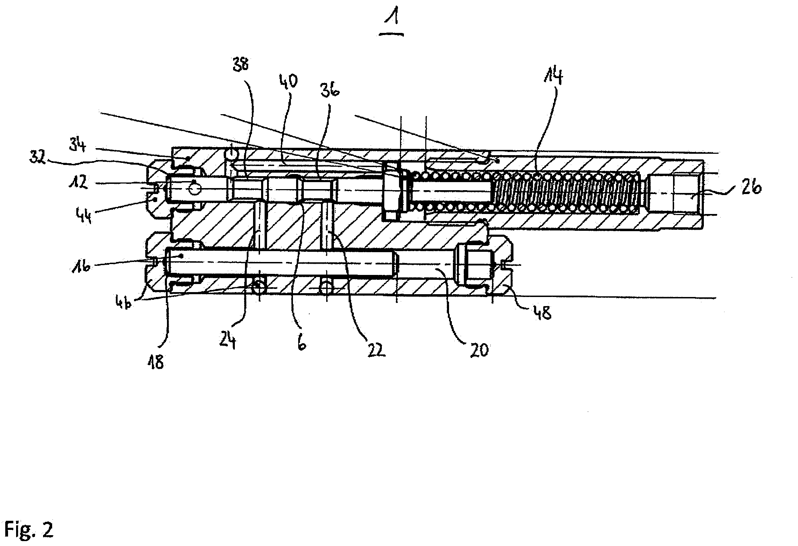

Fig. 2 zeigt schematisch ein erstes bevorzugtes Ausführungsbeispiel des Schmiermittelinjektors 1 am Ende des ersten Schaltzustands I. Wie Fig. 2 zu entnehmen, weist der Schmiermittelinjektor 1 ein Gehäuse 34 auf, in dem der Steuerkolben 12 und der Dosierkolben 16 angeordnet sind. Dabei können der Steuerkolben 12 und der Dosierkolben 16 auch in jeweils eigenen Gehäusen angeordnet sein, die miteinander verbindbar sind. Rückwärtig des Steuerkolbens 12 ist der Schmiermitteleinlass 6 schematisch angedeutet. Um den ersten und den zweiten Schaltzustand bereitstellen zu können, sind am Steuerkolben 12 ein erster Steuerraum 36, insbesondere ein Ringraum, und ein zweiter Steuerraum 38, der ebenfalls bevorzugt als Ringraum ausgebildet ist, angeordnet. Wie Fig. 2 weiter zu entnehmen, ist in dem dargestellten ersten Schaltzustand I der Schmiermitteleinlass 6 über den Ringraum 36 mit dem ersten Schmiermittelkanal 22 und der zweiten Dosierkammer 20 des Kolbens 16 verbunden. Der Schmiermittelkanal 24 dagegen ist über den Ringraum 38 mit einem Schmiermittelauslasskanal 40 verbunden, über den Schmiermittel in Richtung des am Federelement 14 angeordneten Schmiermittelauslasses 26 geleitet wird. Da ein weiteres Zustellen des Kolbens 16 in Richtung der ersten Dosierkammer 18 in dem in Fig. 2 dargestellten Zustand nicht mehr möglich ist, erhöht sich der Druck des Schmiermittels in der zweiten Dosierkammer 20, dem ersten Schmiermittelkanal 22, sowie am Schmiermitteleinlass 6. Übersteigt der Druck am Schmiermitteleinlass 6 oder am Steuerkolben 12 einen bestimmten Wert, so kann Schmiermittel über die hier nicht dargestellte Umschaltdruckkanal 30 in Richtung des Steuerkolbenarbeitsraums 32 geleitet werden, so dass der Steuerkolben 12 gegen die Vorspannung des Vorspannungselements 14 in seinen zweiten Schaltzustand II bewegt werden kann.

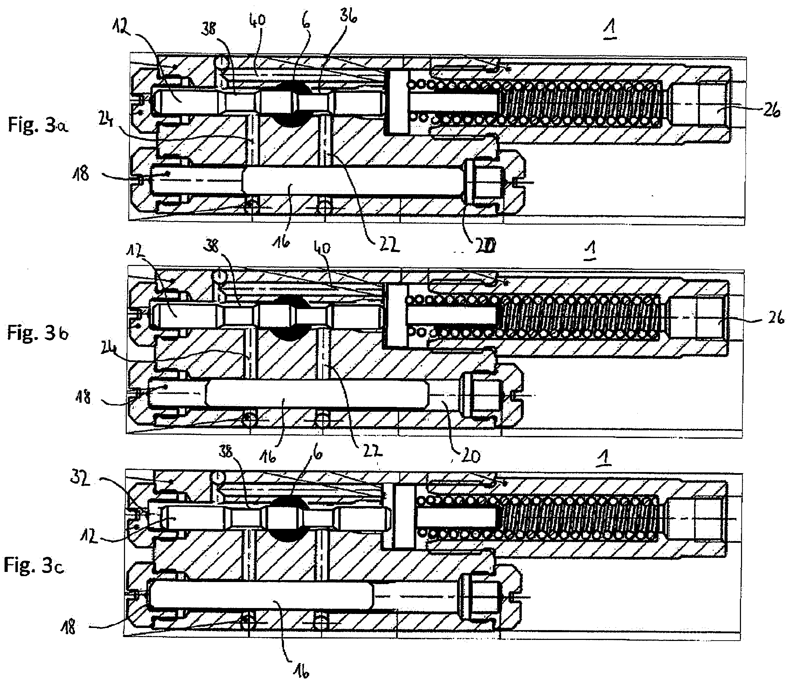

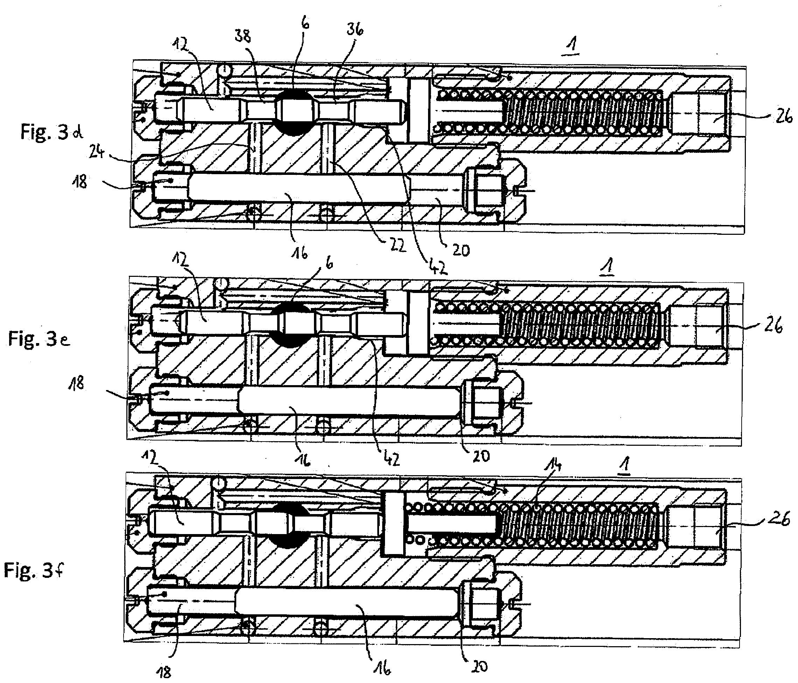

Die Fig. 3a bis 3f zeigen schematisch die Bewegung von Steuerkolben und Dosierkolben während beispielhaft gezeigter Schaltzustände. Dabei zeigt Fig. 3a einen Grundzustand bei dem der Schmiermitteleinlass 6 über den ersten Ringraum 36 mit dem ersten Schmiermittelkanal 22 verbunden ist und Schmiermittel in Richtung der zweiten Dosierkammer 20 des Dosierkolbens 16 führt. Dadurch wird der Kolben 16 in Richtung der ersten Dosierkammer 18, in der sich Schmiermittel aus dem vorhergehenden Zyklus befindet, bewegt, wodurch das in der Kammer 18 vorhandene Schmiermittel über den Schmiermittelkanal 24, den zweiten Steuerraum 38 und den Schmiermittelauslasskanal 40 in Richtung Schmiermittelauslass 26 gefördert wird. Fig. 3b zeigt den erfindungsgemäßen Schmiermittelinjektor in einem Zwischenzustand, während Schmiermittel aus der ersten Dosierkammer 18 in Richtung Schmiermittelauslass 26 gefördert wird. Fig. 3c zeigt einen Zustand bei dem der Dosierkolben 16 das Schmiermittel aus der ersten Dosierkammer 18 verdrängt hat und Schmiermittel in den Ringraum 32 des Steuerkolbens 12 geführt wird. Über den im Steuerkolbenraum 32 aufgebauten Druck wird der Steuerkolben 12 gegen die Vorspannung des Vorspannelements 14 in Richtung des Schmiermittelauslasses 26 verschoben, bis der Steuerkolben 12 seinen zweiten Schaltzustand II erreicht. In dem zweiten Schaltzustand ist, wie Fig. 3d zeigt, der zweite Ringraum 38 mit dem Schmiermitteleinlass 6 verbunden, so dass Schmiermittel über den zweiten Ringraum 38 und den zweiten Schmiermittelkanal 24 in die erste Dosierkammer 18 geleitet wird. Dies bewirkt wiederum ein Zustellen des Dosierkolbens 16 in Richtung der zweiten Dosierkammer 20, wodurch Schmiermittel über den ersten Schmiermittelkanal 22 und den ersten Ringraum 38 in Richtung des Schmiermittelauslasses 26 gefördert wird. Dazu ist insbesondere ein Schmiermittelauslasskanal 42 angeordnet. Im Endzustand des zweiten Schaltzustands, der in Fig. 3e dargestellt ist, ist wiederum der Dosierkolben 16 maximal in Richtung erste Dosierkammer 20 verschoben und die erste Dosierkammer 18 ist vollständig mit Schmiermittel gefüllt. Nach Erreichen dieses Schaltzustands wird üblicherweise auch das Ende des Schmiermittelpumpenzyklus erreicht, so dass kein weiteres bzw. nur wenig Schmiermittel von der Schmiermittelpumpe in Richtung Schmiermitteleinlass 6 gefördert wird. Dadurch sinkt der Schmiermitteldruck in der Schmiermittelleitung 4 und auch im Steuerkolbenraum 32, so dass mithilfe des Vorspannelements 14 der Steuerkolben 12 in den Grundzustand zurückgeschoben werden (siehe Fig. 3f) kann.

Weiterhin sind an dem Schmiermittelinjektor 1, wie insbesondere Fig. 2 zu entnehmen, mehrere Regelschrauben 44, 46, 48 vorgesehen. Dabei kann über die Regelschraube 44 der Hub des Steuerkolbens 12 feinjustiert werden. Alternativ kann die Regelschraube 44 auch als einfaches Abdeckelement ausgebildet sein. Die Regelschrauben 46 und 48 stellen vorteilhafterweise sogenannte Dosierschrauben dar, über die der Hub des Dosierkolbens 16 und damit das Dosiervolumen einstellbar ist. Demnach kann über diese Regelschrauben 46, 48 eine Dosiermenge des Schmiermittels von außen stufenlos einstellbar sein. Alternativ ist es selbstverständlich auch möglich, die Dosierung über die Größe des Dosierkolbens 16 zu bestimmen. Um eine Funktion des Schmiermittelinjektors 1 zu überwachen, kann zusätzlich an den Stirnflächen des Dosierkolbens 16 bzw. des Steuerkolbens 12 ein Sensor, insbesondere ein Näherungselement vorgesehen sein, das feststellt, ob der Schmiermittelinjektor 1, wie gewünscht, funktioniert. Alternativ oder zusätzlich kann auch ein Anzeigestift an Dosierkolben 16 und/oder Steuerkolben 12 vorgesehen sein, der eine optische Funktionsüberwachung ermöglicht.

Wie insbesondere den Fig. 2 und 3 zu entnehmen, ist der Schmiermittelinjektor 1 aus, im Vergleich zum Stand der Technik, sehr wenigen Elementen zusammengesetzt, so dass der gesamte Aufbau vereinfacht ist. Weiterhin ist vorteilhaft, dass sowohl Schmiermittel direkt aus der ersten Dosierkammer 18 und der zweiten Dosierkammer 20 während eines Schmiermittelpumpenzyklus an den Schmiermittelauslass 26 gefördert wird, was insgesamt die geförderte Schmiermittelmenge erhöht.

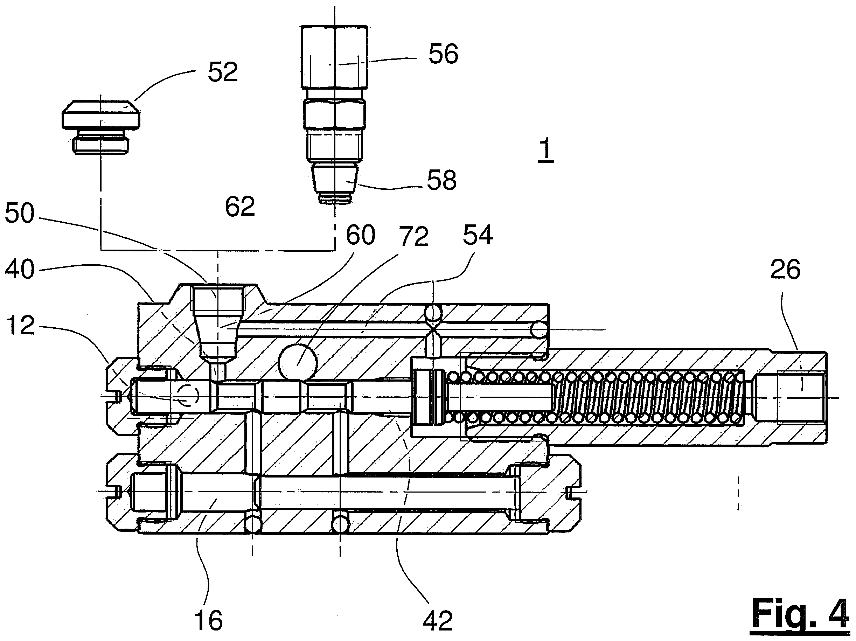

Diese Ausgestaltung, dass Schmiermittel sowohl aus der ersten Dosierkammer 18 als auch aus der zweiten Dosierkammer 20 direkt an einen Schmiermittelauslass 26 gefördert wird, ermöglicht auch weitere erfindungsgemäße Ausgestaltungen, die in Beispielen in den Fig. 4 bis 6 beschrieben werden. Im Gegensatz zu den in den Fig. 2 und 3 dargestellten Ausführungsbeispielen weisen die Fig. 4 bis 6 nicht nur einen Schmiermittelauslass 26, sondern einen zweiten Schmiermittelauslass 50 auf. Dabei kann, wie beispielsweise Fig. 4 zeigt, der erste Schmiermittelauslasskanal 40 sich nicht, wie in Fig. 2 dargestellt, in Richtung des ersten Schmiermittelauslasses 26 erstrecken, sondern kann zu einem zweiten Schmiermittelauslass 50 verlaufen. Dadurch kann Schmiermittel aus der ersten Dosierkammer 18 an dem zweiten Schmiermittelauslass 50 bereitgestellt werden, während das Schmiermittel aus der zweiten Schmiermittelkammer 20 über den zweiten Schmiermittelauslasskanal 42, wie in Fig. 2 besprochen, in Richtung des ersten Schmiermittelauslasses 26 gefördert wird.

Fig. 4 zeigt schematisch noch eine weitere bevorzugte Ausgestaltung des Schmiermittelinjektors 1, da der Schmiermittelauslasskanal 40 nicht nur direkt in den Schmiermittelauslass 50 mündet, sondern es weiterhin vorgesehen ist, dass der Schmiermittelauslass 50 nicht zwingend als Schmiermittelauslass verwendet werden muss. Dazu kann in den Schmiermittelauslass 50 ein Verschlusselement 52 eingepasst werden, das den Schmiermittelauslass 50 dichtend abschließt. Damit jedoch das aus der ersten Schmiermittelkammer 18 geförderte Schmiermittel aus dem Schmiermittelauslasskanal 40 in Richtung eines Schmiermittelauslasses geleitet werden kann, ist weiterhin ein Schmiermittelauslassverbindungskanal 54 geschaffen, der bei geschlossenem zweitem Schmiermittelauslass 50 Schmiermittel aus dem Schmiermittelauslasskanal 40 in Richtung des ersten Schmiermittelauslasses 26 transportiert. Soll der zweite Schmiermittelauslass 50 dagegen als Schmiermittelauslass genutzt werden, kann in den Schmiermittelauslass 50 ein Anschlusselement 56 eingesetzt werden, das vorzugsweise derart ausgebildet ist, dass es den Zugang zum Schmiermittelauslassverbindungskanal 54 blockiert. Dies ist in dem dargestellten Ausführungsbeispiel über eine Konuspassform 58, 60 erreicht, bei denen der Konus 58 des Anschlusselements 56 direkt in die konusförmige Aussparung 60 am Schmiermittelauslass 50 eingepasst werden kann und den Schmiermittelauslassverbindungskanal 54 blockiert.

Statt eines derartig ausgebildeten Anschlusselement kann auch eine andere Vorrichtung, beispielsweise eine Ventilanordnung in den Schmiermittelauslass eingesetzt werden, die das Öffnen bzw. Schließen von Schmiermittelauslass 26; 50 bzw. Schmiermittelauslassverbindungskanal 54 steuert, so dass nochmals gezielt auf den Abgabeort und/oder die Abgabemenge von Schmiermittel eingewirkt werden kann.

Um den zweiten Schmiermittelauslass 50 entsprechend variabel zu gestalten, kann am Schmiermittelauslass 50 eine Verbindungsvorrichtung 62, beispielsweise in Form eines Gewindes, ausgebildet sein, die für eine formschlüssige Aufnahme, beispielsweise des Verschlusselements 52 bzw. des Anschlusselements 56 sorgt. Alternativ kann eine derartige Verbindung auch über eine Steckverbindung oder Schnappverbindung erreicht werden.

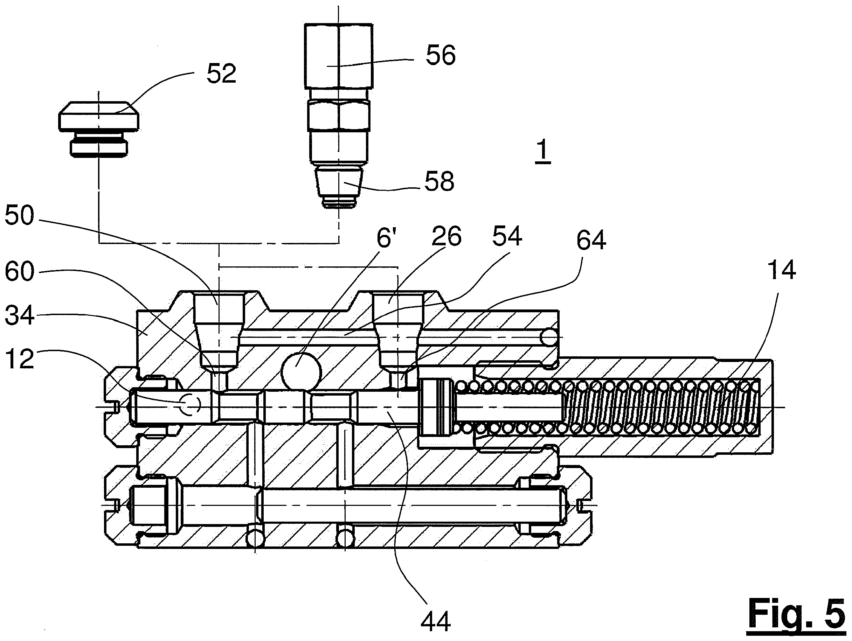

Fig. 5 zeigt eine weitere vorteilhafte Ausgestaltung des erfindungsgemäßen Schmiermittelinjektors 1, bei dem nicht nur der zweite Schmiermittelauslass 50, sondern auch der erste Schmiermittelauslass 26 variabel ausgestaltet sind. Dazu ist der erste Schmiermittelauslass 26 nicht mehr, wie in Fig. 2 dargestellt, über den Federraum des Vorspannelements 14 ermöglicht, sondern ist ebenfalls, wie der zweite Schmiermittelauslass 50 selbst, im Gehäuse 34 des Schmiermittelinjektors 1 angeordnet. Dazu ist der zweite Schmiermittelauslasskanal 44 nicht nur als Ringraum um den Steuerkolben 12 ausgebildet, sondern weist einen Fortsatz 64 auf, der direkt im ersten Schmiermittelauslass 26 mündet. Ist der Schmiermittelauslass 26 durch das Verschlusselement 52 verschlossen, kann Schmiermittel auch über den Schmiermittelauslassverbindungskanal 54 von dem ersten Schmiermittelauslass 26 zu dem zweiten Schmiermittelauslass 50 geleitet werden. Um den Schmiermittelauslassverbindungskanal 54 zu blockieren, kann wiederum, wie bereits unter Bezug auf Fig. 4 beschrieben, an dem Schmiermittelleitungsanschlusselement 56 eine Passform 58 angeordnet sein, die mit einer Gegenpassform 60 zusammenwirkt, und den Schmiermittelauslassverbindungskanal 54 abschließt.

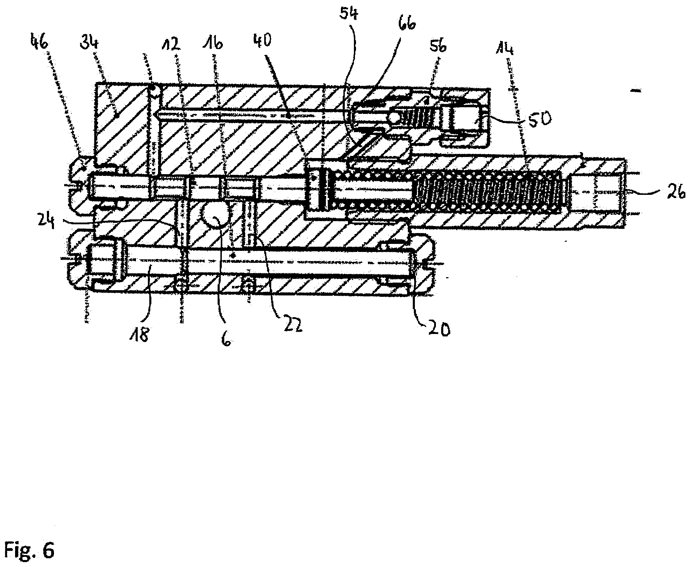

Fig. 6 zeit schematisch ein weiteres bevorzugtes Ausführungsbeispiel, bei dem der zweite Schmiermittelauslass 50 parallel zum ersten Schmiermittelauslass 26 angeordnet ist. Dabei ist der erste Schmiermittelauslass 26 wiederum über das Rückstellelement 14 ausgebildet. Weiterhin ist in Fig. 6 dargestellt, dass in dem zweiten Schmiermittelauslass 50 formschlüssig das Anschlusselement 56 eingepasst ist. Das Anschlusselement 56 weist weiterhin eine Einlassöffnung 66 auf, die den Schmiermittelauslasskanal 40 fluidisch mit dem Schmiermittelauslass 50 verbindet. Gleichzeitig wird ein Schmiermittelauslassverbindungskanal 54 durch das formschlüssige Aufnehmen des Anschlusselements 56 in dem Schmiermittelauslass 50 verschlossen, so dass Schmiermittel aus der ersten Dosierkammer 18 nur über den zweiten Schmiermittelauslass 50 austreten kann. Schmiermittel aus der zweiten Dosierkammer 20 wird dagegen, wie bekannt, dem ersten Schmiermittelauslass 26 zugeführt.

Die erfindungsgemäßen Schmiermittelinjektoren sind insbesondere dann vorteilhaft, wenn mehrere Verbraucher mit Schmiermittel beaufschlagt werden sollen. Dann kann mit einem einzelnen Schmiermittelinjektor nicht nur ein Verbraucher, sondern mindestens zwei Verbraucher mit Schmiermittel versorgt werden. Dies erspart Kosten und verringert den benötigten Bauraum.

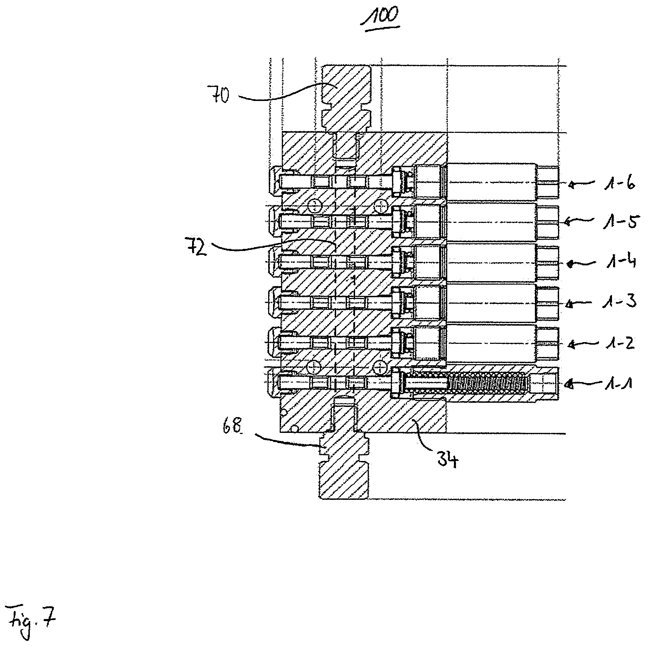

Weiterhin ist in Fig. 7 dargestellt, dass die Schmiermittelinjektoren nicht nur als Einzelelement vorhanden sein können, sondern auch als Block hintereinander anordenbar sind. Dabei können die Schmiermittelinjektoren in einem gemeinsamen Gehäuse, als Einzelelemente, oder auch als mehrere Blöcke in Reihe geschaltet werden.

Fig. 7 zeigt dabei eine schematische Draufsicht von Steuerkolbenseite auf einen Schmiermittelinjektorblock 100, der aus mehreren, dargestellt sind sechs, Schmiermittelinjektoren 1-1, 1-2, 1-3, 1-4, 1-5, und 1-6 aufgebaut ist, die in dem gemeinsamen Gehäuse 34 angeordnet sind. Selbstverständlich können die Schmiermittelinjektoren bzw. die Steuerkolben bzw. Dosierkolben aber auch in getrennten Gehäusen angeordnet sein, die entsprechend zu einem Block verbunden werden. Die Schmiermittelinjektoren 1-1, 1-2, 1-3, 1-4, 1-5, und 1-6 selbst können wie in Fig. 6 dargestellt ausgebildet sein und weisen jeweils einen Steuerkolben 12-1, 12-2, 12-3, 12-4, 12-5 und 12-6, sowie in der Ansicht von Fig. 7 darunter angeordnete Dosierkolben (nicht dargestellt) auf. Weiterhin zeigt Fig. 7, dass an dem Gehäuse 34 ein zentraler Schmiermitteleingang 68 angeordnet ist, über den jeder der Schmiermittelinjektoren 1-1 bis 1-6 mit Schmiermittel beaufschlagbar ist. Dazu ist insbesondere in dem Gehäuse 34 ein Zentralkanal 72 geschaffen, der die Schmiermitteleinlässe der Steuerkolben 12-1 bis 12-6 miteinander verbindet und in Reihe schaltet. Weiterhin kann an dem Gehäuse ein zentraler Schmiermittelauslass 70 vorgesehen sein, über den Schmiermittel aus dem Zentralkanal 72 in einen weiteren Schmiermittelinjektorblock 100 führbar wäre. Ist kein weiterer Schmiermittelinjektorblock 100 mit Schmiermittel zu versorgen, so ist der zentrale Schmiermittelauslass 70 abgeschlossen, so dass das allen in Reihe geschalteten Schmiermittelinjektoren 1, bzw. Schmiermittelinjektorblöcken 100 zugeführte Schmiermittel nur über die jeweiligen Schmiermittelauslässe 26, 50 der einzelnen Schmiermittelinjektoren 1 austreten kann.

Eine derartige Anordnung ist besonders vorteilhaft, da mit einem Element nicht nur ein Verbraucher, sondern mehrere Verbraucher mit Schmiermittel versorgt werden können. Dadurch kann wiederum Bauraum eingespart werden.

Insbesondere kann mit dem erfindungsgemäßen Schmiermittelinjektor ein Schmiermittelinjektor bereitgestellt werden, der aufgrund der geringen Teileanzahl einfach zu fertigen ist. Gleichzeitig müssen die Vorspannfedern nicht, wie im Stand der Technik, aneinander angepasst werden, da lediglich eine Vorspannfeder pro Schmiermittelinjektor nötig ist. Mithilfe der Verschlussschrauben kann zudem Einfluss auf die Dosiermenge genommen werden.

### Bezugszeichenliste

- 1: Schmiermittelinjektor
- 100: Schmiermittelinjektorblock
- 2: Schmiermittelpumpenanordnung
- 4: Schmiermittelleitung
- 6: Schmiermitteleinlass
- 8: Steuereinheit
- 10: Dosiereinheit
- 12: Steuerkolben
- 14: Vorspannelement
- 16: Dosierkolben
- 18: erste Dosierkammer
- 20: zweite Dosierkammer
- 22: erster Schmiermittelkanal
- 24: zweiter Schmiermittelkanal
- 26: Schmiermittelauslass
- 28: Schmiermittelverbraucher
- 30: Schmiermittelumschaltdruckkanal
- 32: Steuerkolbenarbeitsraum
- 34: Gehäuse
- 36: erster Steuerraum
- 38: zweiter Steuerraum
- 40: erster Schmiermittelauslasskanal
- 42: zweiter Schmiermittelauslasskanal
- 44,46,48: Regulierschrauben
- 50: zweiter Schmiermittelauslass
- 52: Verschlusselement
- 54: Schmiermittelauslassverbindungskanal
- 56: Anschlusselement
- 58: konische Passform
- 60: konische Gegenpassform
- 62: Gewinde
- 64: Fortsatz des zweiten Schmiermittelauslasskanals
- 66: Öffnung im Anschlusselement
- 68: zentraler Schmiermitteleingang in Schmiermittelinjektorblock
- 70: zentraler Schmiermittelabgang aus Schmiermittelinjektorblock
- 72: Schmiermittelzentralkanal

- I: erster Schaltzustand
- II: zweiter Schaltzustand

## Patentansprüche

1. Schmiermittelinjektor (1) mit zumindest einem Schmiermitteleinlass (6) und mindestens einem Schmiermittelauslass (26; 50), sowie einem Steuerkolben (12) und einem Dosierkolben (16), wobei der Steuerkolben (12) dazu ausgelegt ist, Schmiermittel von dem Schmiermitteleinlass (6) zu dem Dosierkolben (16) zu leiten und der Dosierkolben (16) dazu ausgelegt ist, das vom Steuerkolben (12) bereitgestellte Schmiermittel zu dem mindestens einen Schmiermittelauslass (26; 50) zu fördern, wobei der Dosierkolben (16) eine erste als erster Kolbenarbeitsraum ausgebildete Dosierkammer (18), und eine zweite als zweiter Kolbenarbeitsraum ausgebildete Dosierkammer (20) aufweist, die jeweils mit dem mindestens einen Schmiermittelauslass (26; 50) verbunden sind, so dass sowohl aus der ersten als auch aus der zweiten Dosierkammer (18; 20) Schmiermittel zu dem mindestens einen Schmiermittelauslass (26; 50) leitbar ist, und wobei weiterhin der Schmiermittelinjektor (1) einen ersten Schmiermittelkanal (22) und einen zweiten Schmiermittelkanal (24) aufweist, wobei der erste Schmiermittelkanal (22) die zweite Dosierkammer (20) mit dem Schmiermitteleinlass (6) oder dem Schmiermittelauslass (26; 50) verbindet und der zweite Schmiermittelkanal (24) die erste Dosierkammer (18) mit dem Schmiermitteleinlass (6) oder dem Schmiermittelauslass (26; 50) verbindet, wobei der Steuerkolben (12) einen ersten Steuerraum (36) und einen zweiten Steuerraum (38) aufweist, wobei in einem ersten Schaltzustand (I) des Steuerkolbens (12) der Schmiermitteleinlass (6) über den ersten Steuerraum (36) des Steuerkolbens (12) mit dem ersten Schmiermittelkanal (22) und der zweiten Dosierkammer (20) des Dosierkolbens (16) verbunden ist, und in einem zweiten Schaltzustand (II) der Schmiermitteleinlass (6) über den zweiten Steuerraum (38) des Steuerkolbens (12) mit dem zweiten Schmiermittelkanal (24) und der ersten Dosierkammer (18) des Dosierkolbens (16) verbunden ist, wobei mindestens zwei Schmiermittelauslässe (26; 50) vorhanden sind,
**dadurch gekennzeichnet, dass** weiterhin mindestens ein Schmiermittelauslassverbindungskanal (54) vorgesehen ist, der zumindest den ersten Schmiermittelauslass (26) und zweiten Schmiermittelauslass (50) verbindet.

2. Schmiermittelinjektor (1) mit zumindest einem Schmiermitteleinlass (6) und mindestens einem Schmiermittelauslass (26; 50), sowie einem Steuerkolben (12) und einem Dosierkolben (16), wobei der Steuerkolben (12) dazu ausgelegt ist, Schmiermittel von dem Schmiermitteleinlass (6) zu dem Dosierkolben (16) zu leiten und der Dosierkolben (16) dazu ausgelegt ist, das vom Steuerkolben (12) bereitgestellte Schmiermittel zu dem mindestens einen Schmiermittelauslass (26; 50) zu fördern, wobei der Dosierkolben (16) eine erste als erster Kolbenarbeitsraum ausgebildete Dosierkammer (18), und eine zweite als zweiter Kolbenarbeitsraum ausgebildete Dosierkammer (20) aufweist, die jeweils mit dem mindestens einen Schmiermittelauslass (26; 50) verbunden sind, so dass sowohl aus der ersten als auch aus der zweiten Dosierkammer (18; 20) Schmiermittel zu dem mindestens einen Schmiermittelauslass (26; 50) leitbar ist, und wobei weiterhin der Schmiermittelinjektor (1) einen ersten Schmiermittelkanal (22) und einen zweiten Schmiermittelkanal (24) aufweist, wobei der erste Schmiermittelkanal (22) die zweite Dosierkammer (20) mit dem Schmiermitteleinlass (6) oder dem Schmiermittelauslass (26; 50) verbindet und der zweite Schmiermittelkanal (24) die erste Dosierkammer (18) mit dem Schmiermitteleinlass (6) oder dem Schmiermittelauslass (26; 50) verbindet, und wobei der Steuerkolben (12) einen ersten Steuerraum (36) und einen zweiten Steuerraum (38) aufweist, wobei in einem ersten Schaltzustand (I) des Steuerkolbens (12) der Schmiermitteleinlass (6) über den ersten Steuerraum (36) des Steuerkolbens (12) mit dem ersten Schmiermittelkanal (22) und der zweiten Dosierkammer (20) des Dosierkolbens (16) verbunden ist, und in einem zweiten Schaltzustand (II) der Schmiermitteleinlass (6) über den zweiten Steuerraum (38) des Steuerkolbens (12) mit dem zweiten Schmiermittelkanal (24) und der ersten Dosierkammer (18) des Dosierkolbens (16) verbunden ist, **dadurch gekennzeichnet, dass** der Steuerkolben (12) weiterhin einen von dem ersten Steuerraum (36) und zweiten Steuerraum (38) getrennten Steuerkolbenarbeitsraum (32) aufweist, der dazu ausgelegt ist, mit einem Schmiermittelumschaltdruckkanal (30) verbunden zu sein, der dazu ausgelegt ist, Schmiermittel in den Steuerkolbenarbeitsraum (32) zu leiten, wenn ein bestimmter Schmiermitteldruck am Schmiermitteleinlass (6) und/oder im ersten Steuerraum (36) des Steuerkolbens (12) anliegt oder überstiegen wird.

3. Schmiermittelinjektor (1) nach Anspruch 1 oder 2, wobei der erste Steuerraum (36) als Ringraum und der zweite Steuerraum (38) als Ringraum ausgebildet sind.

4. Schmiermittelinjektor (1) nach Anspruch 1, 2 oder 3, wobei der erste Schmiermittelkanal (22) über einen ersten Schmiermittelauslasskanal (42), und der zweite Schmiermittelkanal (24) über einen zweiten Schmiermittelauslasskanal (40) mit dem mindestens einen Schmiermittelauslass (26; 50) verbunden sind.

5. Schmiermittelinjektor (1) nach einem der Ansprüche 1 bis 4, wobei in dem ersten Schaltzustand (I) des Steuerkolbens (12) die erste Dosierkammer (18) des Dosierkolbens (16) über den zweiten Schmiermittelkanal (24) und den zweiten Steuerraum (38) des Steuerkolbens (12) mit dem mindestens einen Schmiermittelauslass (26; 50) verbunden ist, und in dem zweiten Schaltzustand (II) die zweite Dosierkammer (20) des Dosierkolbens (16) über den ersten Schmiermittelkanal (22) und den ersten Steuerraum (36) des Steuerkolbens (12) mit dem mindestens einen Schmiermittelauslass (26; 50) verbunden ist.

6. Schmiermittelinjektor (1) nach einem der vorhergehenden Ansprüche, wobei mindestens zwei Schmiermittelauslässe (26; 50) vorhanden sind, und wobei der erste Schmiermittelauslass (26) mit dem ersten Schmiermittelauslasskanal (42) und der zweite Schmiermittelauslass (50) mit dem zweiten Schmiermittelauslasskanal (40) in Verbindung steht.

7. Schmiermittelinjektor (1) nach einem der vorhergehenden Ansprüche, wobei mindestens zwei Schmiermittelauslässe (26; 50) vorhanden sind, und wobei mindestens einer der Schmiermittelauslässe (26; 50) verschließbar ist, und über den mindestens einen Schmiermittelauslassverbindungskanal (54) Schmiermittel zu dem mindestens einen offenen Schmiermittelauslass (50; 26) führbar ist.

8. Schmiermittelinjektor nach einem der vorhergehenden Ansprüche, wobei in mindestens einem Schmiermittelauslass (26; 50) eine Vorrichtung, insbesondere eine Ventilanordnung, ein Verschlusselement oder ein Anschlusselement, anordenbar ist, die dazu ausgelegt ist, den entsprechenden Schmiermittelauslass (26; 50) oder den Schmiermittelauslassverbindungskanal (54) zu öffnen.

9. Schmiermittelinjektor (1) nach einem der vorhergehenden Ansprüche, wobei mindestens zwei Schmiermittelauslässe (26; 50) vorhanden sind, und wobei der erste Schmiermittelauslass (26) über den ersten Schmiermittelauslasskanal (42), den ersten Steuerraum (36) und den ersten Schmiermittelkanal (22) mit der zweiten Dosierkammer (20) des Dosierkolbens (16) in Verbindung steht, und der zweite Schmiermittelauslass (50) über den zweiten Schmiermittelauslasskanal (40), den zweiten Steuerraum (38) und den zweiten Schmiermittelkanal (24) mit der ersten Dosierkammer (18) des Dosierkolbens (16) in Verbindung steht.

10. Schmiermittelinjektor (1) nach einem der vorhergehenden Ansprüche, wobei an dem ersten und/oder zweiten Schmiermittelauslasskanal (40; 42) mindestens ein weiterer Schmiermittelauslass vorgesehen ist.

11. Schmiermittelinjektor (1) nach einem der vorhergehenden Ansprüche, wobei an dem mindestens einen Schmiermittelauslass (26; 50) eine Verbindungseinrichtung (62), insbesondere ein Schraubgewinde, eine Schnappverbindung und/oder eine Steckverbindung, vorgesehen ist, mit der der Schmiermittelauslass (26; 50) mit einer Vorrichtung, insbesondere einer Ventilanordnung, einem Verschlusselement (52) oder einem Anschlusselement (54) zum Anschließen einer Schmiermittelleitung, verbindbar ist.

12. Schmiermittelinjektor (1) nach einem der vorhergehenden Ansprüche, wobei weiterhin ein Steuerkolbenvorspannelement (14), insbesondere eine Rückstellfeder, vorgesehen ist, das den Steuerkolben (12) in den ersten Schaltzustand (I) vorspannt.

13. Schmiermittelinjektor (1) nach Anspruch 12, wobei mindestens ein Schmiermittelauslass (26; 50) als Federraum für das Steuerkolbenvorspannelement (14) ausgebildet ist.

14. Schmiermittelinjektor (1) nach einem der vorhergehenden Ansprüche, wobei weiterhin der Steuerkolben (12) einen Steuerkolbenarbeitsraum (32) aufweist, der mit Schmiermittel beaufschlagbar ist, um den Steuerkolben (12), vorzugsweise gegen eine Vorspannung eines Vorspannungselements (14), in den zweiten Schaltzustand (II) zu überführen.

15. Schmiermittelinjektor (1) nach Anspruch 14, wobei der Steuerkolbenarbeitsraum (32) mit einem Schmiermittelumschaltdruckkanal (30) verbunden ist, der dazu ausgelegt ist, Schmiermittel in den Steuerkolbenarbeitsraum (32) zu leiten, wenn ein bestimmter Schmiermitteldruck am Schmiermitteleinlass (6) und/oder im ersten Steuerraum (36) des Steuerkolbens (12) anliegt.

16. Schmiermittelinjektor (1) nach Anspruch 15, wobei der Schmiermittelumschaltdruckkanal (30) mit dem Schmiermitteleinlass (6) und/oder dem ersten Steuerraum (36) des Steuerkolbens (12) verbunden ist.

17. Schmiermittelinjektor (1) nach einem der vorhergehenden Ansprüche, wobei zumindest der erste und der zweite Schmiermittelauslass (26; 50) an unterschiedlichen Seiten des Schmiermittelinjektors (1) angeordnet sind, oder zumindest der erste und der zweite Schmiermittelauslass (26; 50) an gleichen Seiten des Schmiermittelinjektors (1) angeordnet sind.

18. Schmiermittelinjektor (1) nach einem der vorhergehenden Ansprüche, wobei mindestens ein Kolbenarbeitsraum, insbesondere mindestens eine Dosierkammer, mittels einer Regulierschraube abschließbar ist, über die ein Hub des Dosierkolbens und/oder des Steuerkolbens, vorzugsweise stufenlos, einstellbar ist.

19. Schmiermittelinjektorblock (100) mit mindestens zwei in Reihe verbundenen Schmiermittelinjektoren (1) nach einem der vorhergehenden Ansprüche.

20. Schmiermittelinjektorblock (100) nach Anspruch 19, wobei an dem Schmiermittelinjektorblock (100) ein Schmiermittelzentralkanal (72) vorgesehen ist, über den die mindestens zwei Schmiermitteleinlässe (6) der mindestens zwei Schmiermittelinjektoren (1) mit Schmiermittel versorgbar sind.

21. Schmiermittelinjektorblock (100) nach Anspruch 20, wobei der an dem Schmiermittelinjektorblock (100) ein zentraler Schmiermitteleingang (68) und ein zentraler Schmiermittelabgang (70) vorgesehen sind, die über den Schmiermittelzentralkanal (72) miteinander verbunden sind, wobei vorzugsweise der zentrale Schmiermittelabgang (70) mit einem Abschlusselement verschließbar oder mit einem weiteren Schmiermittelinjektor (1) oder einem weiteren Schmiermittelinjektorblock (100) verbindbar ist.

## Claims

1. Lubricant injector (1) having at least one lubricant inlet (6) and at least one lubricant outlet (26; 50), and also having a control piston (12) and a dosing piston (16), wherein the control piston (12) is designed to direct lubricant from the lubricant inlet (6) to the dosing piston (16) and the dosing piston (16) is designed to convey the lubricant provided by the control piston (12) to the at least one lubricant outlet (26; 50), wherein the dosing piston (16) has a first dosing chamber (18), which is configured as a first piston working chamber, and has a second dosing chamber (20), which is configured as a second piston working chamber, each of which is connected to the at least one lubricant outlet (26; 50) such that lubricant can be directed to the at least one lubricant outlet (26; 50) both from the first and from the second dosing chamber (18; 20), and wherein the lubricant injector (1) furthermore has a first lubricant channel (22) and a second lubricant channel (24), wherein the first lubricant channel (22) connects the second dosing chamber (20) to the lubricant inlet (6) or to the lubricant outlet (26; 50) and the second lubricant channel (24) connects the first dosing chamber (18) to the lubricant inlet (6) or to the lubricant outlet (26; 50), wherein the control piston (12) has a first control chamber (36) and a second control chamber (38), wherein, in a first switching state (I) of the control piston (12), the lubricant inlet (6) is connected via the first control chamber (36) of the control piston (12) to the first lubricant channel (22) and to the second dosing chamber (20) of the dosing piston (16) and, in a second switching state (II), the lubricant inlet (6) is connected via the second control chamber (38) of the control piston (12) to the second lubricant channel (24) and to the first dosing chamber (18) of the dosing piston (16), wherein at least two lubricant outlets (26; 50) are provided,
**characterized in that** provision is furthermore made of at least one lubricant-outlet-connecting channel (54), which connects at least the first lubricant outlet (26) and second lubricant outlet (50).

2. Lubricant injector (1) having at least one lubricant inlet (6) and at least one lubricant outlet (26; 50), and also having a control piston (12) and a dosing piston (16), wherein the control piston (12) is designed to direct lubricant from the lubricant inlet (6) to the dosing piston (16) and the dosing piston (16) is designed to convey the lubricant provided by the control piston (12) to the at least one lubricant outlet (26; 50), wherein the dosing piston (16) has a first dosing chamber (18), which is configured as a first piston working chamber, and has a second dosing chamber (20), which is configured as a second piston working chamber, each of which is connected to the at least one lubricant outlet (26; 50) such that lubricant can be directed to the at least one lubricant outlet (26; 50) both from the first and from the second dosing chamber (18; 20), and wherein the lubricant injector (1) furthermore has a first lubricant channel (22) and a second lubricant channel (24), wherein the first lubricant channel (22) connects the second dosing chamber (20) to the lubricant inlet (6) or to the lubricant outlet (26; 50) and the second lubricant channel (24) connects the first dosing chamber (18) to the lubricant inlet (6) or to the lubricant outlet (26; 50), and wherein the control piston (12) has a first control chamber (36) and a second control chamber (38), wherein, in a first switching state (I) of the control piston (12), the lubricant inlet (6) is connected via the first control chamber (36) of the control piston (12) to the first lubricant channel (22) and to the second dosing chamber (20) of the dosing piston (16) and, in a second switching state (II), the lubricant inlet (6) is connected via the second control chamber (38) of the control piston (12) to the second lubricant channel (24) and to the first dosing chamber (18) of the dosing piston (16),
**characterized in that** the control piston (12) furthermore has a control-piston working chamber (32) which is separated from the first control chamber (36) and the second control chamber (38) and is designed to be connected to a lubricant switching-pressure channel (30), which is designed to direct lubricant into the control-piston working chamber (32) when a specific lubricant pressure prevails or is exceeded at the lubricant inlet (6) and/or in the first control chamber (36) of the control piston (12).

3. Lubricant injector (1) according to Claim 1 or 2, wherein the first control chamber (36) is configured as an annular chamber and the second control chamber (38) is configured as an annular chamber.

4. Lubricant injector (1) according to Claim 1, 2 or 3, wherein the first lubricant channel (22) is connected via a first lubricant outlet channel (42), and the second lubricant channel (24) is connected via a second lubricant outlet channel (40), to the at least one lubricant outlet (26; 50).

5. Lubricant injector (1) according to one of Claims 1 to 4, wherein, in the first switching state (I) of the control piston (12), the first dosing chamber (18) of the dosing piston (16) is connected via the second lubricant channel (24) and the second control chamber (38) of the control piston (12) to the at least one lubricant outlet (26; 50) and, in the second switching state (II), the second dosing chamber (20) of the dosing piston (16) is connected via the first lubricant channel (22) and the first control chamber (36) of the control piston (12) to the at least one lubricant outlet (26; 50).

6. Lubricant injector (1) according to one of the preceding claims, wherein there are at least two lubricant outlets (26; 50) present, and wherein the first lubricant outlet (26) is connected to the first lubricant outlet channel (42) and the second lubricant outlet (50) is connected to the second lubricant outlet channel (40).

7. Lubricant injector (1) according to one of the preceding claims, wherein there are at least two lubricant outlets (26; 50) present, and wherein at least one of the lubricant outlets (26; 50) can be closed off, and lubricant can be guided via the at least one lubricant-outlet-connecting channel (54) to the at least one open lubricant outlet (50; 26).

8. Lubricant injector according to one of the preceding claims, wherein, in at least one lubricant outlet (26; 50), it is possible for there to be arranged an apparatus, in particular a valve arrangement, a closure element or a connection element, which is designed to open the corresponding lubricant outlet (26; 50) or the lubricant-outlet-connecting channel (54) .

9. Lubricant injector (1) according to one of the preceding claims, wherein there are at least two lubricant outlets (26; 50) present, and wherein the first lubricant outlet (26) is connected via the first lubricant outlet channel (42), the first control chamber (36) and the first lubricant channel (22) to the second dosing chamber (20) of the dosing piston (16), and the second lubricant outlet (50) is connected via the second lubricant outlet channel (40), the second control chamber (38) and the second lubricant channel (24) to the first dosing chamber (18) of the dosing piston (16).

10. Lubricant injector (1) according to one of the preceding claims, wherein provision is made at the first and/or second lubricant outlet channel (40; 42) of at least one further lubricant outlet.

11. Lubricant injector (1) according to one of the preceding claims, wherein provision is made at the at least one lubricant outlet (26; 50) of a connecting device (62), in particular a screw thread, a snap-action connection and/or a plug-action connection, by way of which the lubricant outlet (26; 50) can be connected to an apparatus, in particular a valve arrangement, a closure element (52) or a connection element (54) for connection of a lubricant line.

12. Lubricant injector (1) according to one of the preceding claims, wherein provision is furthermore made of a control-piston-preloading element (14), in particular a restoring spring, which preloads the control piston (12) into the first switching state (I) .

13. Lubricant injector (1) according to Claim 12, wherein at least one lubricant outlet (26; 50) is configured as a spring chamber for the control-piston-preloading element (14).

14. Lubricant injector (1) according to one of the preceding claims, wherein, furthermore, the control piston (12) has a control-piston working chamber (32), which can be charged with lubricant in order to transfer the control piston (12) into the second switching state (II), preferably counter to a preload of a preloading element (14).

15. Lubricant injector (1) according to Claim 14, wherein the control-piston working chamber (32) is connected to a lubricant switching-pressure channel (30), which is designed to direct lubricant into the control-piston working chamber (32) when a specific lubricant pressure prevails at the lubricant inlet (6) and/or in the first control chamber (36) of the control piston (12).

16. Lubricant injector (1) according to Claim 15, wherein the lubricant switching-pressure channel (30) is connected to the lubricant inlet (6) and/or to the first control chamber (36) of the control piston (12).

17. Lubricant injector (1) according to one of the preceding claims, wherein at least the first and the second lubricant outlet (26; 50) are arranged on different sides of the lubricant injector (1), or at least the first and the second lubricant outlet (26; 50) are arranged on identical sides of the lubricant injector (1).

18. Lubricant injector (1) according to one of the preceding claims, wherein at least one piston working chamber, in particular at least one dosing chamber, can be closed off by means of a regulating screw via which a stroke of the dosing piston and/or of the control piston can be set, preferably in a continuously variable manner.

19. Lubricant-injector block (100) having at least two lubricant injectors (1) according to one of the preceding claims which are connected in series.

20. Lubricant-injector block (100) according to Claim 19, wherein provision is made at the lubricant-injector block (100) of a lubricant central channel (72), via which the at least two lubricant inlets (6) of the at least two lubricant injectors (1) can be supplied with lubricant.

21. Lubricant-injector block (100) according to Claim 20, wherein provision is made at the lubricant-injector block (100) of a central lubricant entry (68) and a central lubricant exit (70), which are connected to one another via the lubricant central channel (72), wherein preferably the central lubricant exit (70) can be closed off by a closure element or can be connected to a further lubricant injector (1) or to a further lubricant-injector block (100).

## Revendications

1. Injecteur de lubrifiant (1) comportant au moins une entrée de lubrifiant (6) et au moins une sortie de lubrifiant (26 ; 50), ainsi qu'un piston de commande (12) et un piston de dosage (16), le piston de commande (12) étant conçu pour guider le lubrifiant de l'entrée de lubrifiant (6) au piston de dosage (16) et le piston de dosage (16) étant conçu pour refouler le lubrifiant fourni par le piston de commande (12) jusqu'à l'au moins une sortie de lubrifiant (26 ; 50), le piston de dosage (16) présentant une première chambre de dosage (18) réalisée sous forme de premier espace de travail de piston, et une deuxième chambre de dosage (20) réalisée sous forme de deuxième espace de travail de piston, lesquelles sont reliées respectivement à l'au moins une sortie de lubrifiant (26 ; 50), de sorte que le lubrifiant puisse être guidé à la fois de la première tout comme de la deuxième chambre de dosage (18 ; 20) à l'au moins une sortie de lubrifiant (26 ; 50), et l'injecteur de lubrifiant (1) présentant en outre un premier canal de lubrifiant (22) et un deuxième canal de lubrifiant (24), le premier canal de lubrifiant (22) reliant la deuxième chambre de dosage (20) à l'entrée de lubrifiant (6) ou à la sortie de lubrifiant (26 ; 50) et le deuxième canal de lubrifiant (24) reliant la première chambre de dosage (18) à l'entrée de lubrifiant (6) ou à la sortie de lubrifiant (26 ; 50), le piston de commande (12) présentant un premier espace de commande (36) et un deuxième espace de commande (38), l'entrée de lubrifiant (6) étant reliée, par le biais du premier espace de commande (36) du piston de commande (12), au premier canal de lubrifiant (22) et à la deuxième chambre de dosage (20) du piston de dosage (16) dans un premier état de commutation (I) du piston de commande (12), et l'entrée de lubrifiant (6) étant reliée, par le biais du deuxième espace de commande (38) du piston de commande (12), au deuxième canal de lubrifiant (24) et à la première chambre de dosage (18) du piston de dosage (16) dans un deuxième état de commutation (II), au moins deux sorties de lubrifiant (26 ; 50) étant présentes,
**caractérisé en ce qu'**en outre au moins un canal de liaison de sortie de lubrifiant (54) est prévu, lequel relie au moins la première sortie de lubrifiant (26) et la deuxième sortie de lubrifiant (50).

2. Injecteur de lubrifiant (1) comportant au moins une entrée de lubrifiant (6) et au moins une sortie de lubrifiant (26 ; 50), ainsi qu'un piston de commande (12) et un piston de dosage (16), le piston de commande (12) étant conçu pour guider le lubrifiant de l'entrée de lubrifiant (6) au piston de dosage (16) et le piston de dosage (16) étant conçu pour refouler le lubrifiant fourni par le piston de commande (12) jusqu'à l'au moins une sortie de lubrifiant (26 ; 50), le piston de dosage (16) présentant une première chambre de dosage (18) réalisée sous forme de premier espace de travail de piston, et une deuxième chambre de dosage (20) réalisée sous forme de deuxième espace de travail de piston, lesquelles sont reliées respectivement à l'au moins une sortie de lubrifiant (26 ; 50), de sorte que le lubrifiant puisse être guidé à la fois de la première tout comme de la deuxième chambre de dosage (18 ; 20) à l'au moins une sortie de lubrifiant (26 ; 50), et l'injecteur de lubrifiant (1) présentant en outre un premier canal de lubrifiant (22) et un deuxième canal de lubrifiant (24), le premier canal de lubrifiant (22) reliant la deuxième chambre de dosage (20) à l'entrée de lubrifiant (6) ou à la sortie de lubrifiant (26 ; 50) et le deuxième canal de lubrifiant (24) reliant la première chambre de dosage (18) à l'entrée de lubrifiant (6) ou à la sortie de lubrifiant (26 ; 50), et le piston de commande (12) présentant un premier espace de commande (36) et un deuxième espace de commande (38), l'entrée de lubrifiant (6) étant reliée, par le biais du premier espace de commande (36) du piston de commande (12), au premier canal de lubrifiant (22) et à la deuxième chambre de dosage (20) du piston de dosage (16) dans un premier état de commutation (I) du piston de commande (12), et l'entrée de lubrifiant (6) étant reliée, par le biais du deuxième espace de commande (38) du piston de commande (12), au deuxième canal de lubrifiant (24) et à la première chambre de dosage (18) du piston de dosage (16) dans un deuxième état de commutation (II), **caractérisé en ce que** le piston de commande (12) présente en outre un espace de travail de piston de commande (32) séparé du premier espace de commande (36) et du deuxième espace de commande (38), lequel espace de travail de piston de commande est conçu pour être relié à un canal de pression de commutation de lubrifiant (30) qui est conçu pour guider le lubrifiant dans l'espace de travail de piston de commande (32) lorsqu'une pression de lubrifiant déterminée s'applique, ou est dépassée, au niveau de l'entrée de lubrifiant (6) et/ou dans le premier espace de commande (36) du piston de commande (12).

3. Injecteur de lubrifiant (1) selon la revendication 1 ou 2, le premier espace de commande (36) étant réalisé sous forme d'espace annulaire et le deuxième espace de commande (38) étant réalisé sous forme d'espace annulaire.

4. Injecteur de lubrifiant (1) selon la revendication 1, 2 ou 3, le premier canal de lubrifiant (22) étant relié, par le biais d'un premier canal de sortie de lubrifiant (42), et le deuxième canal de lubrifiant (24) étant relié, par le biais d'un deuxième canal de sortie de lubrifiant (40), à l'au moins une sortie de lubrifiant (26 ; 50) .

5. Injecteur de lubrifiant (1) selon l'une des revendications 1 à 4, la première chambre de dosage (18) du piston de dosage (16) étant reliée, par le biais du deuxième canal de lubrifiant (24) et du deuxième espace de commande (38) du piston de commande (12), à l'au moins une sortie de lubrifiant (26 ; 50) dans le premier état de commutation (I) du piston de commande (12), et la deuxième chambre de dosage (20) du piston de dosage (16) étant reliée, par le biais du premier canal de lubrifiant (22) et du premier espace de commande (36) du piston de commande (12), à l'au moins une sortie de lubrifiant (26 ; 50) dans le deuxième état de commutation (II).

6. Injecteur de lubrifiant (1) selon l'une des revendications précédentes, au moins deux sorties de lubrifiant (26 ; 50) étant présentes, et la première sortie de lubrifiant (26) étant en liaison avec le premier canal de sortie de lubrifiant (42) et la deuxième sortie de lubrifiant (50) étant en liaison avec le deuxième canal de sortie de lubrifiant (40).

7. Injecteur de lubrifiant (1) selon l'une des revendications précédentes, au moins deux sorties de lubrifiant (26 ; 50) étant présentes, et au moins l'une des sorties de lubrifiant (26 ; 50) pouvant être fermée, et le lubrifiant pouvant être guidé jusqu'à l'au moins une sortie de lubrifiant ouverte (50 ; 26) par le biais de l'au moins un canal de liaison de sortie de lubrifiant (54) .

8. Injecteur de lubrifiant selon l'une des revendications précédentes, un dispositif, en particulier un ensemble de soupape, un élément de fermeture ou un élément de raccordement, pouvant être disposé dans au moins une sortie de lubrifiant (26 ; 50), lequel dispositif est conçu pour ouvrir la sortie de lubrifiant (26 ; 50) correspondante ou le canal de liaison de sortie de lubrifiant (54).

9. Injecteur de lubrifiant (1) selon l'une des revendications précédentes, au moins deux sorties de lubrifiant (26 ; 50) étant présentes, et la première sortie de lubrifiant (26) étant en liaison avec la deuxième chambre de dosage (20) du piston de dosage (16) par le biais du premier canal de sortie de lubrifiant (42), du premier espace de commande (36) et du premier canal de lubrifiant (22), et la deuxième sortie de lubrifiant (50) étant en liaison avec la première chambre de dosage (18) du piston de dosage (16) par le biais du deuxième canal de sortie de lubrifiant (40), du deuxième espace de commande (38) et du deuxième canal de lubrifiant (24).

10. Injecteur de lubrifiant (1) selon l'une des revendications précédentes, au moins une autre sortie de lubrifiant étant prévue au niveau du premier et/ou du deuxième canal de sortie de lubrifiant (40 ; 42).

11. Injecteur de lubrifiant (1) selon l'une des revendications précédentes, un moyen de liaison (62), en particulier un filetage, une liaison par encliquetage et/ou une liaison enfichable, étant prévu au niveau de l'au moins une sortie de lubrifiant (26 ; 50), moyen de liaison à l'aide duquel la sortie de lubrifiant (26 ; 50) peut être reliée à un dispositif, en particulier à un ensemble de soupape, un élément de fermeture (52) ou un élément de raccordement (54) pour le raccordement d'une conduite de lubrifiant.

12. Injecteur de lubrifiant (1) selon l'une des revendications précédentes, un élément de précontrainte de piston de commande (14), en particulier un ressort de rappel, étant en outre prévu, lequel élément précontraint le piston de commande (12) dans le premier état de commutation (I).

13. Injecteur de lubrifiant (1) selon la revendication 12, au moins une sortie de lubrifiant (26 ; 50) étant réalisée sous la forme d'un espace de ressort pour l'élément de précontrainte de piston de commande (14).

14. Injecteur de lubrifiant (1) selon l'une des revendications précédentes, le piston de commande (12) présentant en outre un espace de travail de piston de commande (32) qui peut être soumis à l'action du lubrifiant, afin de faire passer le piston de commande (12) au deuxième état de commutation (II), de préférence à l'encontre d'une précontrainte d'un élément de précontrainte (14).

15. Injecteur de lubrifiant (1) selon la revendication 14, l'espace de travail de piston de commande (32) étant relié à un canal de pression de commutation de lubrifiant (30) qui est conçu pour guider le lubrifiant dans l'espace de travail de piston de commande (32) lorsqu'une pression de lubrifiant déterminée s'applique sur l'entrée de lubrifiant (6) et/ou dans le premier espace de commande (36) du piston de commande (12).

16. Injecteur de lubrifiant (1) selon la revendication 15, le canal de pression de commutation de lubrifiant (30) étant relié à l'entrée de lubrifiant (6) et/ou au premier espace de commande (36) du piston de commande (12) .

17. Injecteur de lubrifiant (1) selon l'une des revendications précédentes, au moins la première et la deuxième sortie de lubrifiant (26 ; 50) étant disposées sur des côtés différents de l'injecteur de lubrifiant (1), ou au moins la première et la deuxième sortie de lubrifiant (26 ; 50) étant disposées sur des mêmes côtés de l'injecteur de lubrifiant (1).

18. Injecteur de lubrifiant (1) selon l'une des revendications précédentes, au moins un espace de travail de piston, en particulier au moins une chambre de dosage, pouvant être fermé(e) au moyen d'une vis de régulation par le biais de laquelle une course du piston de dosage et/ou du piston de commande peut être réglée, de préférence de manière continue.

19. Bloc d'injecteurs de lubrifiant (100) comportant au moins deux injecteurs de lubrifiant (1) selon l'une des revendications précédentes reliés en série.

20. Bloc d'injecteurs de lubrifiant (100) selon la revendication 19, un canal central de lubrifiant (72) étant prévu sur le bloc d'injecteurs de lubrifiant (100), canal par le biais duquel les au moins deux entrées de lubrifiant (6) des au moins deux injecteurs de lubrifiant (1) peuvent être alimentées en lubrifiant.

21. Bloc d'injecteurs de lubrifiant (100) selon la revendication 20, une entrée centrale de lubrifiant (68) et une sortie centrale de lubrifiant (70) étant prévues sur le bloc d'injecteurs de lubrifiant (100), lesquelles sont reliées l'une à l'autre par le biais du canal central de lubrifiant (72), la sortie centrale de lubrifiant (70) pouvant de préférence être fermée à l'aide d'un élément de fermeture ou pouvant être reliée à un autre injecteur de lubrifiant (1) ou à un autre bloc d'injecteurs de lubrifiant (100).
